(19) Europäisches Patentamt
European Patent Office
Office européen des brevets

(11) Publication number: 0 255 381 A2

(12) # EUROPEAN PATENT APPLICATION

(21) Application number: 87306747.4

(22) Date of filing: 30.07.87

(51) Int. Cl.⁴: C 08 K 5/00
C 08 K 5/49, C 08 K 3/22,
C 08 G 18/00

(30) Priority: 01.08.86 US 891977

(43) Date of publication of application:
03.02.88 Bulletin 88/05

(84) Designated Contracting States:
BE DE FR GB IT NL SE

(71) Applicant: STAUFFER CHEMICAL COMPANY
Westport Connecticut 06881 (US)

(72) Inventor: Konkus, David Michael
49 Troy Lane
Yonkers New Jersey 10701 (US)

Kraft, Paul
6 Imperial Lane
Spring Valley New Jersey 10977 (US)

(74) Representative: Froud, Clive et al
Elkington and Fife High Holborn House 52/54 High Holborn
London WC1V 6SH (GB)

(54) **Flame retardant for polyurethane compositions.**

(57) A four-component flame retardant combination is disclosed: (a) a dialkylalkanolaminoalkylphosphonate; (b) a poly(organophosphate/phosphonate; (c) a polyhalogenated aromatic flame retardant; and (d) alumina trihydrate. It can be used in hydroxy/epoxy-containing prepolymer compositions which are adapted to be reacted with polyisocyanate to form poly(oxazolidone/urethane) materials.

EP 0 255 381 A2

**Description**

## FLAME RETARDANT FOR POLYURETHANE COMPOSITIONS

The present invention pertains to a flame retardant system for urethane-based polymers, e.g., for poly(oxazolidone/urethane) compositions.

U.S. Patent No. 4,386,191 to A. L. DiSalvo et al. describes compositions for forming poly(oxazolidone/urethane) thermoset compositions by reaction of a prepolymer containing terminal epoxy and non-terminal, secondary hydroxy groups with a polyisocyanate. The prepolymer is advantageously formed by the reaction of polyol, acid anhydride and diepoxide, preferably in a single step. Details regarding these thermoset systems are found in the aforementioned patent, which is incorporated herein by reference. Often, it is desirable to blend the aforementioned type of prepolymer with a paraffinic polyol chain extender. U.S. Patent No. 4,415,469 to C. Tsai, also incorporated herein by reference, indicates that such prepolymer/polyol chain extender blends can be rendered phase stable for storage by heating the polyol and prepolymer in the presence of one another to yield such a phase stable composition which can be later reacted to form the desired poly(oxazolidone/urethane) thermoset compositions.

In European Patent Publication No. 137,442, published April 24, 1985 and in copending U.S. Serial No. 793,736, filed November 1, 1985, it was proposed to flame retard the aforementioned type of compositions with a blend of: (1) a dialkylalkanolaminoalkylphosphonate flame retardant such as described in U.S. Patent No. 3,235,517 to T. M. Beck et al. and U.S. Patent No. 4,052,487 to G. L. Sturtz et al.; and (2) a poly(oxyorganophosphate/phosphonate) flame retardant, such as described in U.S. Patent Nos. 4,199,534; 4,268,633; and 4,335,178 to R. B. Fearing. The first named type of flame retardant is commercially available under the trademark FYROL 6 from Stauffer Chemical Company and is represented by the compound diethyl N,N-bis(2-hydroxyethyl)aminomethylphosphonate. The second named type of flame retardant is represented by the product commercially available under the trademark FYROL 51 from Stauffer Chemical Company which is an oligomeric product formed by the reaction of dimethyl methylphosphonate and $P_2O_5$ with an ethylene oxide post-treatment to remove residual acidity therefrom. The aforementioned two-component fire retardant blend gives good flame retardancy to the composition while maintaining unexpectedly good heat distortion temperature characteristics. Despite this, still better flame retardancy characteristics are desired, particularly for foamed versions of such a flame retarded poly(oxazolidone/urethane) composition.

The present invention relates to the use of a four-component flame retardant system in the aforementioned poly(oxazolidone/urethane) compositions:

(a) a dialkylalkanolaminoalkylphosphonate flame retardant;
(b) a poly(oxyorganophosphate/phosphonate) flame retardant;
(c) a polyhalogenated aromatic compound flame retardant; and
(d) alumina trihydrate.

Certain preferred embodiments of the aforementioned four-component blend has produced exceptionally good flame spread index values when used in poly(oxazolidone/urethane) thermoset foams in the UL-478 Radiant Panel flame retardancy test (also described as ASTM E 162-81).

The terminology "dialkylalkanolaminoalkylphosphonate", as used herein, is meant to encompass, for example, the type of flame retardants shown in U.S. Patent No. 3,235,517 to T. M. Beck et al., for example. Such compounds can be represented by the general formula

$$\begin{matrix} & O & & \\ RO & \| & & R_2OH \\ & >PR^4N< & & \\ R^1O & & & R_3OH \end{matrix}$$

where R and $R^1$ can independently be alkyl (e.g., $C_1$-$C_4$) and/or haloalkyl (e.g., $C_1$-$C_4$ chloroalkyl) radicals, $R_2$ and $R_3$ can be the same or different lower alkylene radicals (e.g., $C_1$-$C_4$), and $R_4$ is a lower alkylene radical. They can be made by reaction of a dialkylanolamine, an aldehyde or ketone, and a dialkyl phosphite as described in the Beck et al. patent.

The terminology "poly(organophosphate/phosphonate)" as used herein is intended to encompass the type of flame retardants shown in U.S. Patent Nos. 4,199,534; 4,268,633; and 4,335,178. Such compounds can be represented by the average formula

$$-[-\underset{\displaystyle O}{\overset{\displaystyle O}{\overset{\|}{P}}}-OR_3-O-\underset{\displaystyle OR_1}{\overset{\displaystyle O}{\overset{\|}{P}}}-OR_3-O-\underset{\displaystyle OR_2}{\overset{\displaystyle O}{\overset{\|}{P}}}-OR_3-O-]_m-$$

wherein m is an integer from 1 to 50; R, $R_1$ and $R_2$ are individually selected from saturated hydrocarbon radicals, alkaryl radicals, aralkyl radicals, and aryl radicals; and $R_3$ is:

$$\begin{matrix} R4 & & R6 \\ & ->C-C<- & \\ R_5 & & R7 \end{matrix}$$

wherein $R_4$, $R_5$, $R_6$ and $R_7$ are individually selected from hydrogen atom, hydrocarbon radicals, and halogenated hydrocarbon radicals.

Such poly(organophosphate/phosphonate) flame retardants can be formed by reaction of a diorgano organophosphonate with a phosphorus oxide, followed by reaction of the reaction product with an epoxide, either alone or in admixture with an alcohol.

The two remaining flame retardant additives are a polyhalogenated aromatic flame retardant and alumina trihydrate. These two types have been described for use in polyurethane foams with antimony trioxide as an essential component, rather than with the phosphorus-based flame retardants just described, in U.S. Patent Nos. 8,738,953 and 3,909,464 to C. J. Anorga et al.

The terminology "polyhalogenated aromatic flame retardant" is intended to cover the class of flame retardants recited by the aforesaid patents to Anorga et al., each of which is incorporated herein by reference. Preferred are the polyhalogenated benzenes, such as decarbromodiphenyl oxide (also termed "decabromodiphenyl ether").

The alumina trihydrate additive of the present invention is a known flame retardant, although not in combination with three other essential flame retardants described for use herein.

If representative, useful amounts of the four flame retardants are expressed, based on the total weight of the four-component flame retardant package, they can be:

| Flame Retardant | Percent Range |
|---|---|
| Dialkylalkanolaminoalkyl-phosphonate | 6% to 12% |
| Poly(oxyorganophosphate/phosphonate) | 6% to 12% |
| Polyhalogenated aromatic compound | 24% to 30% |
| Alumina trihydrate | 50% to 58% |

If desired, all four flame retardants can be mixed together in a single composition. However, if such a composition is allowed to stand for an extended amount of time prior to use, it may be necessary to stir it to disperse the finely divided solid components (the polyhalogenated aromatic compound and the alumina trihydrate) more uniformly in the other liquid components.

If the entire weight of all four flame retardants is expressed as a percentage of the hydroxy-containing prepolymer (including any optional polyol chain extender) it will generally range from about 30% to about 45%. The weight percent of all four flame retardants in the final polymer will generally be from about 15% to about 22%.

The flame retardant system of the present invention is broadly applicable for use in urethane-based polymers, for example, those urethane-based polymers which also contain oxazolidone linkages, e.g., as shown in U.S. Patent No. 4,386,191 to A. L. DiSalvo, et al.

The following Examples are intended to illustrate certain embodiments of the present invention.

EXAMPLE 1

This Example illustrates the process used to make a reactive prepolymer composition which, when reacted with a diisocyanate reactant, forms the poly(oxazolidone/urethane) compositions which were tested in Example 2 for flame retardancy.

A mixture of 148 grams (1.0 equivalent weight) of phthalic anhydride, 305 grams (1.02 hydroxy equivalent weights) of polyethylene glycol (ave. mol. wt. 600), 385 grams (1.01 epoxy equivalent weights) of the diglycidyl ether of bisphenol A (EPON 828 brand from Shell Chemical Co.), and 3.3 grams of methyltrialkyl ($C_8$-$C_{10}$) ammonium chloride catalyst (ADOGEN 464 brand from Sherex Chemical Company, Inc.) was heated at 122° C-130° C. After 40 minutes of heating, the resulting product was found to be free of acidic material, and it had an epoxide equivalent of 927.

The resulting prepolymer was blended with ethylene glycol chain extender at a prepolymer/chain extender ratio of 75/25. To 100 parts by weight of the blend was then added about 0.1 part by weight of dibutyl tin dilaurate to act as a catalyst. This reactive mixture or prepolymer composition is referred to hereinafter as "Component B" and was used to react with a diisocyanate ("Component A") to form poly(oxazolidone/urethane) thermosets.

EXAMPLE 2

A series of reaction injection molding (RIM) experiments were used using the prepolymer composition (Component B) and a commercially available polymethylene poly-phenyl isocyanate (PAPI 94 brand) as Component A.

The Component B formulation, in all cases comprised:

| Ingredient | Parts By Weight |
|---|---|
| Prepolymer/Ethylene Glycol (75/25 weight ratio) | 62.94 |
| Dialkylalkanolaminoalkylphosphonate flame retardant (FYROL 6 brand) | 3.17 |
| Poly(organophosphate/phosphonate) flame retardant (FYROL 51 brand) | 3.17 |
| Fluorocarbon blowing agent | 3.5 |

The above formulation was reacted with the diisocyanate at an isocyanate index of 103 (except for Run No. 4) using the isocyanate:prepolymer composition in a weight:weight ratio of isocyanate:prepolymer of about 0.86:1. The above described Component B formulation was also varied, as described below, by the insertion of additional parts by weight of additives as described below.

| Run No. | Glass[1] | Deca Br[2] | ATH[3] | Flame Spread[4] |
|---|---|---|---|---|
| 1 | 18.16 | 9.08 | - | 83 |
| 2 | 18.16 | 9.08 | 9.08 | 66 |
| 3[5] | - | 9.08 | 18.16 | 47[7] |
| 4[6] | - | 9.08 | 18.16 | 73 |

1) The glass additive used was a 1/16 inch milled glass fiber.

2) Indicates use of decabromodiphenyl oxide available as CALIBAN F/R P-39P brand from White Chemical Corp.

3) Indicates use of alumina trihydrate available as SB-136 brand from Silem Industries, Inc.

4) Determined in accordance with ASTM E 162-81a (Method for Surface Flammability of Materials Using a Radiant Heat Energy Source). The Flame Spread Index is calculated as a product of the flame spread and the heat-evolution factors obtained from the test data. This test is also known as Underwriters' Laboratory test UL-478. Standard red oak yields a value of 100. Highly fire retardant materials give an index of 25 or less; highly flammable materials as high as 1000. The values reported are an average of six

runs.

5) Tested at an isocyanate index of 103.

6) Tested at an isocyanate index of 125 wherein the formulation contained about 17% additional isocyanate on a weight basis.

7) The values of the individual flame index for six burns were 40; 42; 46; 49; 53 and 54; averaging 47.

The above data illustrate that removal of glass filler and the use of no substantial excess of isocyanate (as performed for comparative purposes in Run No. 4), gave the best results for the structural foam material that was tested. In fact, since the value obtained for Run No. 3 was lower than a 50 average for the six burns with no value exceeding 75, it passes the UL-478 test qualifying the composition for a "yellow card" rating. No commercial flame retarded RIM material is believed to qualify for such a rating at the current time.

The representative physical properties for structural foam products made in accordance with Run No. 3, above, in three separate trials all fell within the following ranges:

| Physical Property | Range |
|---|---|
| Density (ASTM D-792) | 0.78 - 1.12 g/cc |
| Tensile Str. (ASTM D-638) | 3875 - 7425 psi |
| Elongation (ASTM D-638) | 5.2 - 7.5% |
| Flex. Mod. (ASTM D-790) | 2.01 - 3.6 x $10^5$ psi |
| Charpy Impact - Specimen on Open Surface (ASTM D-256) | 5.0 - 11.6 ft.lb/$in^2$ |
| Heat Distortion Temp. - 264 psi (ASTM D-648) | 65 - 78°C |

## Claims

1. A flame retardant combination, suitable for use in flame retarding urethane-based polymers, characterised in that it comprises, as essential flame retardant additives:
   (a) a dialkylalkanolaminoalkylphosphonate;
   (b) a poly(organophosphate/phosphonate);
   (c) a polyhalogenated aromatic flame retardant; and
   (d) alumina trihydrate.
2. A combination as claimed in claim 1 wherein (c) is a polyhalogenated benzene or decabromodiphenyl oxide.
3. A combination as claimed in claim 1 or claim 2 wherein (a) is present in an amount of from about 6% to about 12% by weight of the combination.
4. A combination as claimed in any of claims 1 to 3 wherein (b) is present in an amount of from about 6% to about 12% by weight of the combination.
5. A combination as claimed in any of claims 1 to 4 wherein (c) is present in an amount of from about 24% to about 30% by weight of the combination.
6. A combination as claimed in any of claims 1 to 5 wherein (d) is present in an amount of from about 50% to about 58% by weight of the combination.
7. A composition characterised in that it comprises a prepolymer having terminal epoxy and non-terminal secondary hydroxy groups admixed with a flame retardant combination as claimed in any of claims 1 to 6.
8. A composition charactersied in that it comprises a prepolymer having terminal epoxy and non-terminal secondary hydroxy groups and a paraffinic polyol chain extender admixed with a flame retardant combination as claimed in any of claims 1 to 6.
9. A urethane-based polymer characetrised in that it contains a flame retardant combination as claimed in any of claims 1 to 6.
10. A poly(oxazolidone/urethane) polymer characterised in that it contains a flame retardant combination as claimed in any of claims 1 to 6.